Europäisches Patentamt

European Patent Office

Office européen des brevets

(11) Publication number: **0 484 990 A1**

# EUROPEAN PATENT APPLICATION

(21) Application number: **91201034.5**

(22) Date of filing: **01.05.91**

(51) Int. Cl.⁵: **B60R 1/00**

(30) Priority: **26.10.90 ES 9002728**

(43) Date of publication of application:
**13.05.92 Bulletin 92/20**

(84) Designated Contracting States:
**DE FR GB IT SE**

(71) Applicant: **Corta Ferrer, Ignacio**
**Albaida, Recinto, 2, casa 6 - 2o izda**
**E-41008 Sevilla(ES)**

(72) Inventor: **Corta Ferrer, Ignacio**
**Albaida, Recinto, 2, casa 6 - 2o izda**
**E-41008 Sevilla(ES)**

(74) Representative: **Ungria Lopez, Javier et al**
**Avda. Ramon y Cajal, 78**
**E-28043 Madrid(ES)**

(54) **Rear-view mirror with front-view television camera.**

(57) To allow the driver of a vehicle to see oncoming traffic in the opposite lane, the rearview mirror (1) of the vehicle houses a television camera (2) connected to a video amplifier and the latter to a television screen inside the vehicle.

The camera (2) is mounted on a telescopic rod (3), and under control of a lever actuated switch a motor produces the opening of a window (7) in the rearview mirror, and the extension of the telescopic rod (3), moving the camera to a position away from the vehicle.

FIG.2

## OBJECT OF THE INVENTION

The present invention, as is expressed in the title of this specification, consists of an improved rear-view mirror whose purpose is to allow one to see the lane opposite the driver, who is going to pass. Therefore, the invention makes it possible to see the presence of a vehicle coming head on, when one is going to pass, thus avoiding passing from starting when danger exists.

## BACKGROUND OF THE INVENTION

Conventionally, rear-view mirrors are known which are located outside of the vehicle, on the driver's side as well as on the passenger's side, by which the possible vehicles that can approach by the rear, on the left as well as on the right, are seen in such a way that the driver can detect the presence of a vehicle that approaches in the rear upon changing lanes in order to pass.

On the contrary, when the driver faces the need to pass he does not have any device which permits him to see the opposite lane, in order to detect the presence of a vehicle in the opposite direction, for which purpose it is necessary to stick out the "nose" of the vehicle to determine whether or not another vehicle is approaching in the opposite direction, with the subsequent risk entailed in such an operation.

## DESCRIPTION OF THE INVENTION

In order to solve the above cited inconveniences, the invention consists of an improved rear-view mirror which permits one to see the opposite lane, each time that it is necessary to pass.

For this purpose the invention has a rear-view mirror inside of which a small television camera placed on the end of a telescopic rod, inside which runs a coaxial cable through which the images captured by the camera are sent, is coupled.

Besides, the telescopic rod has inside it a strip which is related to a toothed wheel which is moved, by some toothed pulleys, by a motor, so that upon activating the operation of said motor, the extension of the telescopic rod towards the outside of the mirror takes place, so that the latter has on its side a window that opens at the same time that the motor is operated, in such a way that the camera moves toward the outside a certain length, equivalent to the extension of the telescopic rod.

The inside of the vehicle has an image amplifier that is connected by means of the coaxial cable that runs through the telescopic rod to the television camera, in such a way that the images detected by the same are picked up.

On the other hand, the image amplifier is connected to a cathode ray tube or screen through which the image detected by the television camera placed on the end of the telescopic rod is materialized.

Obviously, the television screen remains located in the dashboard in an adequate place.

In this way, each time that a driver is in the position requiring the passing of another vehicle, the driver by means of a lever that controls a switch, activates the motor, causing the window to open and the television camera to go outside, at the same time that the television screen is turned on, in such a way that the driver of the vehicle can see the possible vehicles that are coming head on in the opposite direction, without the need to stick out the "nose" of the vehicle, thus reducing the risks always entailed in passing.

Once the operation has finished, the lever that controls the switch is moved so that in the first place the telescopic rod retracts, until the television camera, placed on the end thereof, remains hidden inside the mirror, which is when the window placed in one side of the rear-view mirror closes, at the same time that the television screen is turned off, remaining in an inoperative state until it is necessary to use the same in order to pass another vehicle.

Hereinafter, to make it easier to understand this specification and forming an integral part of the same, a series of figures is attached in which the object of the invention is represented in an illustrative non-restrictive manner.

## BRIEF DESCRIPTION OF THE FIGURES

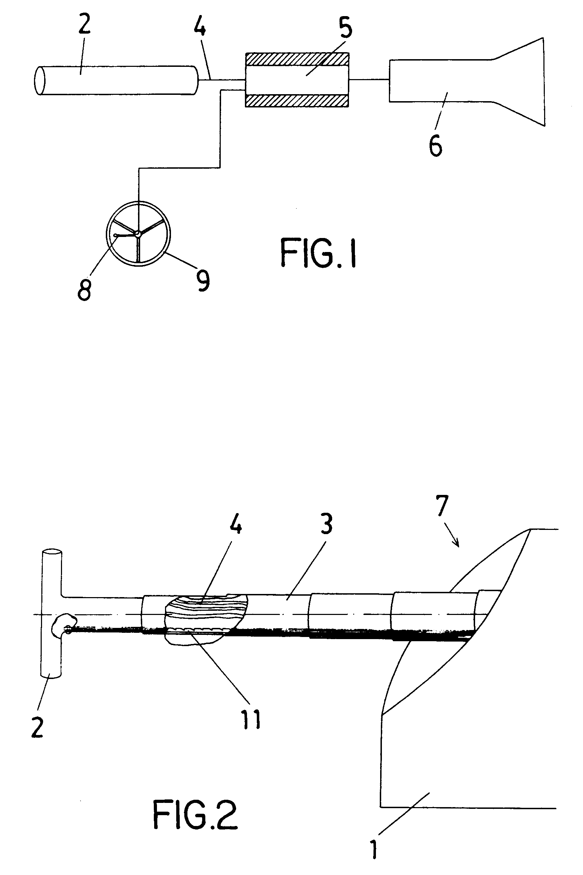

Figure 1.- It shows a general diagram of the elements that make up the improvements of the rear-view mirror, in accordance with the invention.

Figure 2.- It shows a partially sectioned view of the improved rear-view mirror of the invention, from which the telescopic rod emerges through the window placed in said mirror, the telescopic rod having on its end the television camera which makes it possible to see the cars that come head on in the opposite direction.

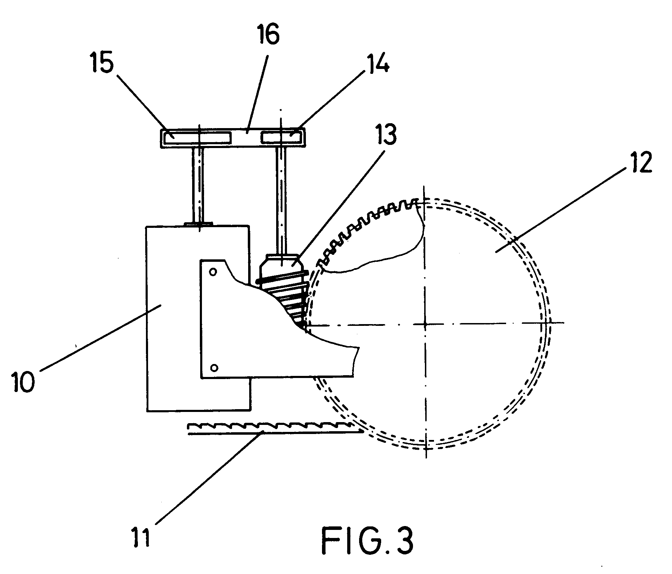

Figure 3.- It shows a view of the mechanical part of the invention, by means of which the extension and retraction of the telescopic rod is made possible, as well as the opening of the window placed in the rear-view mirror.

## DESCRIPTION OF AN EMBODIMENT

Hereinafter a description of the invention is made based on the above cited figures.

Thus, the invention consists of an improved rear-view mirror whose purpose is to permit one to detect the presence of a vehicle that is coming head on and in the opposite direction of the vehicle that includes the improved rear-view mirror of the invention, thus reducing the risks entailed always in passing.

In order to obtain the above cited aims, the rear-view mirror (1) has a television camera (2) that remains placed on the end of a telescopic rod (3), inside which runs the coaxial cable (4) through which the signals corresponding to the image captured by the television camera (2) are sent.

The television camera (2) is connected, by means of the coaxial cable (4) to an image amplifier (5), which in turn is connected to a cathode ray tube or television screen (6), so that through it the images captured by the television camera (2) are seen.

The telescopic rod (3) folded up is included inside the rear-view mirror (1.)

The telescopic rod (3) includes inside it a strip (11) which is related to a toothed wheel (12), which is moved by means of a worm (13) in the end of which there is a toothed pulley (14) that is related by means of a toothed belt (16) with another toothed pulley (15) included in the shaft of a motor (10.) This entire unit is included inside the rear-view mirror.

The rear-view mirror has a window (7) through which the extension of the telescopic rod (3) is permitted upon activating the motor (10), just as is explained hereinafter.

Thus, upon activating the motor (10) by means of a lever (8) located on the steering wheel (9), the rotation of the toothed belt (15) is produced which at the same time produces the rotation of the toothed pulley (14) by means of the toothed belt (16), whereby the worm (13) produces the rotation of the toothed wheel (12) which operates the strip (11) included inside the telescopic rod (3.)

At the same time that the activation of the motor is produced, either by the same or by another device, the window (7) included in the rear-view mirror (1) is opened, thus permitting the extension of the telescopic rod (3) towards the outside, and therefore the television camera remains located outside the vehicle.

Besides, upon moving the lever (8), the image amplifier (5) and the television screen (6) are turned on, in such a way that this permits the images captured by the television camera (2) to be seen on the screen.

Therefore, each time that the driver needs to pass, he moves the lever (8) producing the above cited turning on sequence, in such a way that the television camera (2) remains at a distance from the vehicle, capturing the images located in front of the vehicle in the opposite lane, which facilitates seeing cars that are coming head on, without the need to stick out the "nose" of the vehicle to see whether any other vehicle is coming in the opposite direction head on, facilitating the passing operation and reducing the risks that such an operation always entails.

Once the passing has concluded or when the service of the television camera is no longer needed, the lever (8) is moved again in such a way that the image amplifier (5) and televesion screen (6) are turned off, at the same time that the motor (10) is activated in the opposite direction producing the retraction of the telescopic rod (3) and therefore of the television camera (2), remaining included in the rear-view mirror (1) and the window (7) included in said rear-view mirror (1) closing.

**Claims**

1. IMPROVED REAR-VIEW MIRROR, whose purpose is to permit one to see the opposite lane, permitting one to detect the presence of vehicles that approach head on, upon effecting the passing operation, essentially characterized because the rear-view mirror (1) includes inside it a telescopic rod (3) whose end has a television camera (2) connected to an image amplifier (5) and to a television screen (6) placed inside the vehicle; it being foreseen that the rear-view mirror (1) includes a motor (10) and has a window (7), also having a control which controls a switch which upon being operated produces the opening of the window (7), the turning on of the television screen (6) and the extending of the telescopic rod (3), the television camera (2) remaining at a distance from the vehicle, capturing the images of the events that take place in the opposite lane in front of the vehicle; and with the particular feature that upon moving the lever (8) again the rotation of the motor in the opposite direction is produced and therefore the retracting of the telescopic rod (3), turning off the television screen (6) and closing of the window (7) are produced.

2. IMPROVED REAR-VIEW MIRROR, according to claim 1, characterized because the telescopic rod (3) houses inside it the coaxial cable (4) of connection of the television camera (2) to the video amplifier (5), also housing a strip (11) which is related to a toothed wheel (12) connected to a worm (13) in whose end there is a toothed pulley (14), related, by means of a toothed belt (16), with a toothed pulley (15) of the motor (10) to produce the extension and retraction of the telescopic rod (3) and therefore of the televison camera (2); it being foreseen that the motor (2) has means for the opening and closing of the window (7.)

FIG.1

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | WO-A-8 706 543 (KASOS N.V.)<br>* abstract; figures *<br>--- | 1 | B60R1/00 |
| A | WO-A-9 001 853 (PETROSSIAN)<br>* claims 1,4-7,10-12; figure 1 *<br>--- | 1 | |
| A | DE-A-3 900 667 (KIRSEVER, FAHRI)<br>* claims 1,5; figure 1 *<br>--- | 1 | |
| A | FR-A-1 081 699 (EISENRING)<br>* the whole document *<br><br>----- | 1 | |
| | | | TECHNICAL FIELDS SEARCHED (Int. Cl.5)<br><br>B60R |

The present search report has been drawn up for all claims

| Place of search | Date of completion of the search | Examiner |
|---|---|---|
| THE HAGUE | 05 FEBRUARY 1992 | DUBOIS B.F.J. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document